# EUROPEAN PATENT APPLICATION

(11) **EP 4 763 441 A1**
(43) Date of publication of application: **24.06.2026**
(21) Application number: 25168059.1
(22) Date of filing: 02.04.2025
(51) Int. Cl.: B25J 15/00, B25J 15/02, B65G 1/04, B65G 47/90, G07F 11/16

(54) **ARTICLES ACCESS MECHANISM, ARTICLES ACCESS ROBOT AND METHOD**

(30) Priority: 23.12.2024 CN 202411910361
(71) Applicant: Beijing Jingdong Yuansheng Technology Co., Ltd., Beijing 100176 (CN); Beijing Jingdong Qianshi Technology Co., Ltd., Beijing 100176 (CN)
(72) Inventor: WANG, Guopeng, Beijing, 100176 (CN)
(74) Representative: Page White Farrer

(57) **Abstract**

The disclosure provides an articles access mechanism, an articles access robot, and a method, relates to the technical field of automatic storage and pickup of articles, to meet the storing and pickup requirements of articles with different shapes. The articles access mechanism comprises a support base (1), a clamp mechanism (2) and a blocking mechanism (3). The support base (1) comprises a support member (11); the clamp mechanism (2) comprises a sliding assembly (21), which is slidably mounted on the support member (11) in a first direction, and clamping sections (22) arranged in pair, which are movably mounted on the sliding assembly (21) in a second direction. The blocking mechanism (3) comprises a second blocking member (32), which is mounted on the support member (11), and a first blocking member (31), which is movably mounted on the sliding assembly (21) in a third direction. The above-mentioned articles access mechanism is applied to regular-shaped articles and irregular-shaped articles, with more working modes and more abundant functions.

## Description

### CROSS-REFERENCE TO RELATED APPLICATIONS

This disclosure is based on and claims priority to the application with Application No. 202411910361.X filed on December 23, 2024.

### BACKGROUND OF THE INVENTION

### Field of the Invention

This present disclosure relates to the technical field of automatic articles access, in particular an articles access mechanism, an articles access robot, and a method.

### Description of Related Art

Boxed medicines and bottled medicines are common types of pharmaceuticals. These medicines have relatively regular and uniform shapes, and in related technologies, the medicine dispensing machines picks out the medicines by clamping.

The inventors found that there are at least the following problems in related art: Currently, the types of medicines are becoming more and more diverse, some medicines do not have the conventional rectangular parallelepiped shape, and the medicine dispensing machines are unable to pick out the irregular-shaped medicines.

### SUMMARY OF THE INVENTION

This disclosure provides an articles access mechanism, an articles access robot, and a method, in order to meet the storing and pickup requirements of articles with different shapes.

Some embodiments of this disclosure provide an articles access mechanism, comprising: a support base comprising a support member;
a clamp mechanism comprising a sliding assembly, which is slidably mounted on the support member in a first direction, and clamping sections arranged in pair, which are movably mounted on the sliding assembly in a second direction; and
a blocking mechanism comprising a second blocking member, which is mounted on the support member, and a first blocking member, which is movably mounted on the sliding assembly in a third direction;
wherein the first direction and the second direction are located in a horizontal plane and intersect with each other, and the third direction is different from the first direction and the second direction.

In some embodiments, the sliding assembly comprises:
a frame comprising a first column, a second column, and a connecting column; the first column and the second column being arranged at intervals, with one end of the connecting column fixedly connected to the first column and the other end of the connecting column fixedly connected to the second column; the first column slidably holding one end of the support member in the second direction and the second column slidably holding the other end of the support member in the second direction; and
a first drive mounted on one of the first column, the second column, and the connecting column; a first transmission mechanism; and
first connectors arranged in pairs; each of the first connectors being drivingly connected to the first drive through the first transmission mechanism to move in the second direction under the drive of the first drive.

In some embodiments, the first transmission mechanism comprises:
a first gear fixedly connected to the output shaft of the first drive;
a first rack meshed with the first gear; and
a second rack meshed with the first gear and arranged parallel to the first rack;
wherein one of the first connectors is fixedly connected to the first rack, and the other first connector is fixedly connected to the second rack.

In some embodiments, the first transmission mechanism further comprises:
first guide sections arranged in pairs and fixedly mounted to the connecting column, all of the individual first guide sections being arranged side by side along a moving direction of the first rack, the first gear being located between the pair of first guide sections;
wherein one of the first connectors is slidably mounted to one of the first guide sections and the other of the first connectors is slidably mounted to the other first guide section; wherein one of the clamping sections is fixedly connected with one of the first connectors, and the other clamping sections is fixedly connected with the other first connector.

In some embodiments, the blocking mechanism further comprises:
a second drive mounted on the first column, the second column or the connecting column; and
a second transmission mechanism drivingly connected to the second drive to be rotated under the drive of the second drive;
wherein the first blocking member is mounted to the second transmission mechanism to rotate in the third direction along with the second transmission mechanism.

In some embodiments, the second transmission mechanism comprises:
an output shaft gear fixedly connected to a power output shaft of the second drive;
second gears arranged in pairs, one of the second gears being engaged with the output shaft gear;
half gears arranged in pairs, the half gears corresponding to and engaged with the second gear one to one correspondence to be driven by the second gear to rotate; and
a connecting shaft fixedly connecting the respective half gears arranged in pairs or fixedly connecting the two second gears;
wherein one end of the first blocking member is fixedly connected with one of the half gears, and
the other end of the first blocking member is fixedly connected with the other half gear.

In some embodiments, the second transmission mechanism further comprises:
third connectors arranged in pairs, corresponding to and fixedly connected to the half gears one to one correspondence; the first blocking member with its one end in the second direction being fixedly connected to one of the third connectors, and the first blocking member with the other end in the second direction being fixedly connected to the other third connectors.

In some embodiments, the first blocking member comprises a first limit position and a second limit position;
the first blocking member abuts against the support member and is located between the clamping sections arranged in pairs in the second direction when the first blocking member is at the first limit position; the first blocking member is configured to push the articles out of the support member as the sliding assembly moves in the first direction; or, the first blocking member is configured to block the articles to prevent the articles from falling from an end of the support member where the first blocking member is provided;
the first blocking member is located outside the movement trajectory of each clamping section in the second direction when the first blocking member is at the second limit position, and the clamping sections are movable in the second direction.

In some embodiments, the clamp mechanism further comprises:
a third drive mounted on the bottom of the support member, and
a third transmission mechanism drivingly connected to the third drive and fixedly connected to the sliding assembly; the sliding assembly is configured to move linearly in the first direction along with the third transmission mechanism under the drive of the third drive.

In some embodiments, the third transmission mechanism comprises:
a first guide rail fixedly mounted at the support base,
a second guide section slidably mounted on the first guide rail; the sliding assembly being fixedly mounted on the second guide section;
a pulley fixedly connected to an output shaft of the third drive;
a first belt mounted on the bottom of the support base; the first belt being meshed with the pulley; the sliding assembly being fixedly connected to the first belt.

In some embodiments, the blocking mechanism further comprises:
a fourth drive mounted on the support member, and
a fourth transmission mechanism drivingly connected to the fourth drive;
wherein the second blocking member is rotatably mounted at one of ends of the support member in the first direction, and the fourth drive is drivingly connected to the second blocking member to enable the second blocking member to switch between the following positions: an upright state and a lying state.

In some embodiments, the fourth transmission mechanism comprises:
a crank, one end of which is fixedly connected to a power output shaft of the fourth drive; and
a connecting rod, one end of which is rotatably connected to the other end of the crank, and the other end of which is rotatably connected to the second blocking member;
wherein the fourth drive is located on the bottom of the support member, and the crank and the connecting rod are also located on the bottom of the support member.

In some embodiments, the articles access mechanism further comprises:
a limiting member mounted on the support member and located at the end of the support member away from the second blocking member.

In some embodiments, the first blocking member is provided with a groove, which is configured to avoid the limiting member; wherein the limiting member is located in the groove, when the first blocking member is at the first limit position.

In some embodiments, the articles access mechanism is configured to comprise the irregular-shaped articles pickup state as below:
in the first direction, the limiting member is located between the first blocking member at the first limit position and the second blocking member in the upright state;
in the second direction, the first blocking member is located between the pair of clamping sections;
wherein the first blocking member, the second blocking member and the pair of clamping sections together enclose a storage frame with a top opening.

In some embodiments, the articles access mechanism is configured to comprise the irregular-shaped articles unloading state as below:
in the first direction, the first blocking member at the first limit position is located between the limiting member and the second blocking member in the lying state, or the first blocking member at the first limit position accommodates the limiting member through its own accommodating groove; the first blocking member is located between the pair of clamping sections in the second direction;
wherein the first blocking member moves in the first direction along with the sliding assembly to push the articles on the support member out of the support member.

In some embodiments, the articles access mechanism comprises the regular-shaped articles pickup state as below:
the first blocking member is at the second limit position; and in the first direction, the first blocking member is located on a side of individual clamping sections away from the second blocking member; in the second direction, the first blocking member is located outside the movement trajectory of the clamping section; the second blocking member is in the lying state, the clamping sections move in the first direction along with the sliding assembly to extend out of the support base, and the clamping sections close in the second direction to clamp the articles outside the support member.

In some embodiments, the articles access mechanism comprises the regular-shaped articles unloading state as below:
the first blocking member is at the second limit position; and in the first direction, the first blocking member is located on a side of individual clamping sections away from the second blocking member; in the second direction, the first blocking member is located outside the movement trajectory of the clamping section; the second blocking member is in the lying state; the clamping sections close in the second direction to clamp the articles located on the support member; the clamping sections move in the first direction along with the sliding assembly to extend out of the support base, so as to deliver the clamped articles out of the support member.

In some embodiments, the articles access mechanism comprises the regular-shaped articles unloading state as below:
the first blocking member is located at the first limit position; in the first direction, the first blocking member is located between the limiting member and the second blocking member in the lying state, and the first blocking member is located between the pair of clamping sections;
wherein the first blocking member moves in the first direction along with the sliding assembly to push the articles on the support member out of the support member.

Some embodiments of this disclosure further provide an articles access robot, comprising: a pallet arm; and
the articles access mechanism according to any one of the technical solutions of this disclosure, which is rotatably mounted on the pallet arm.

In some embodiments, the articles access robot further comprises:
a fifth drive mounted at the pallet arm, and
a fifth transmission mechanism drivingly connected to the fifth drive and fixedly connected to the articles access mechanism to enable the articles access mechanism to rotate under the drive of the fifth drive.

In some embodiments, the articles access robot further comprises:
a support column;
a sixth drive mounted on the support column; and
a sixth transmission mechanism drivingly connected to the sixth drive, and the sixth transmission mechanism being fixedly connected to the pallet arm to enable the articles access mechanism to move along the support column under the drive of the sixth drive.

In some embodiments, the sixth transmission mechanism comprises:
a first synchronous wheel mounted at one end of the support column; the first synchronous wheel being fixedly connected to a power output shaft of the sixth drive;
a second synchronous wheel mounted at the other end of the support column;
a synchronous belt tensioned by the first synchronous wheel and the second synchronous wheel; the articles access mechanism being mounted on the synchronous belt to move up and down as the synchronous belt rotates;
a second guide rail mounted on the support column; and
a third guide section slidably mounted on the second guide rail, and the articles access mechanism being fixedly mounted on the third guide section.

Some embodiments of this disclosure further provide a method for picking up and unloading articles, comprising the steps of:
determining whether the articles access system is to pick up or unload articles, wherein the articles access system comprises the articles access robot according to any one of the technical solutions of the invention;
determining whether the shape of the articles to be picked up is regular if the articles access system is to pick up articles;
adjusting the articles access mechanism to the regular-shaped articles pickup state if the shape of the articles is regular;
extending the clamp mechanism of the articles access system to clamp the articles.

In some embodiments, the method for picking up and unloading articles further comprises the steps of:
adjusting the articles access mechanism of the articles access system to the irregular-shaped articles pickup state if the shape of the articles is irregular;
placing the articles into the storage frame formed by the articles access mechanism of the articles access system.

In some embodiments, the method for picking up and unloading articles further comprises the steps of:
determining whether the shape of the articles to be unloaded is regular if the articles access system is to unload articles;
adjusting the articles access mechanism of the articles access system to the regular-shaped articles unloading state if the shape of the articles is regular;
pushing the articles out of the support member of the articles access mechanism or clamping the articles out of the support member.

In some embodiments, the method for picking up and unloading articles further comprises the steps of:
adjusting the articles access mechanism of the articles access system to the irregular-shaped articles unloading state if the shape of the articles is irregular;
pushing the articles out of the support member of the articles access mechanism.

The articles access mechanism provided by the above technical solutions has a variety of working states and is mainly applicable to accessing medicines and similar sized articles. For regular-shaped articles, the clamping sections are used to pick them up; for irregular-shaped articles, a storage frame with a top opening is formed, in which the irregular articles are directly pushed to be picked up. Moreover, since there are barriers on all sides of the storage frame, the irregular articles is also firmly placed on the support member, and the irregular articles are not likely to fall off and the articles picking operation is reliable. When storing articles, the clamping sections is also used to clamp regular articles to achieve articles picking. The above-mentioned articles access mechanism is applied to regular-shaped articles and irregular-shaped articles, with more working modes and more abundant functions.

### BRIEF DESCRIPTION OF THE DRAWINGS

Figure 1 shows a schematic view of a three-dimensional structure of an articles access mechanism provided in some embodiments of this disclosure.
Figure 2 shows a schematic view of another three-dimensional structure of an articles access mechanism provided in some embodiments of this disclosure.
Figure 3 shows a schematic view of a yet another three-dimensional structure of an articles access mechanism provided in some embodiments of this disclosure.
Figure 4 shows a schematic view of a three-dimensional structure of the sliding assembly of an articles access mechanism provided in some embodiments of this disclosure.
Figure 5 shows a schematic view of an articles access mechanism provided in some embodiments of this disclosure.
Figure 6 shows a schematic view of an articles access mechanism provided in some embodiments of this disclosure.
Figure 7 shows a schematic view of an articles access mechanism clamping a single piece of articles provided in some embodiments of this disclosure.
Figure 8 shows a schematic view of an articles access mechanism clamping a single piece of articles clamping multiple pieces of articles provided in some embodiments of this disclosure.
Figure 9 shows a schematic view of a three-dimensional structure of an articles access robot provided in some embodiments of this disclosure.
Figure 10 shows a schematic view of another three-dimensional structure of an articles access robot provided in some embodiments of this disclosure.
Figure 11 shows a schematic view of a three-dimensional structure of an articles access system provided in some embodiments of this disclosure.
Figure 12 shows a schematic view of another three-dimensional structure of an articles access system provided in some embodiments of this disclosure.
Figure 13 shows a schematic view of yet another three-dimensional structure of an articles access system provided in some embodiments of this disclosure.
Figure 14 shows a structural schematic view of an articles access system provided in some embodiments of this disclosure at a second storage zone.
Figure 15 shows a schematic view of a method for picking up and unloading articles provided in some embodiments of this disclosure.

### List of reference signs:

100. Medicine storage cabinet; 200. Packaging machine; 300. Express delivery locker; 400. Articles; 500. Articles access robot;
1. Support base; 2. Clamp mechanism; 3. Blocking mechanism; 4. Limiting member; 5. Pallet arm; 6. Fifth drive; 7. Fifth transmission mechanism; 8. Support column; 9. Sixth drive; 10. Sixth transmission mechanism; 12. Walking mechanism.
11. Support member;
21. Sliding assembly; 22. Clamping section; 23. Third drive; 24. Third transmission mechanism;
211. Frame; 2121. First drive; 2122. First transmission mechanism; 2123. First connector;
2111. First column; 2112. Second column; 2113. Connecting column;
2122a. First gear; 2122b. First rack; 2122c. Second rack; 2122d. First guide section;
240. First guide rail; 241. Second guide section; 242. Pulley; 243. First belt;
31. First blocking member; 32. Second blocking member; 33. Second drive; 34. Second transmission mechanism; 35. Fourth drive; 36. Fourth transmission mechanism; 311. Accommodating groove;
341. Second gear; 342. Half gear; 343. Connecting shaft; 344. Third connector;
360. Connecting rod; 361. Crank;
71. Third gear; 72. Fourth gear;
101. First synchronous wheel; 102. Second synchronous wheel; 103. Synchronous belt; 104. Third guide section;
1001. First storage zone; 1002. Second storage zone; 1003. Crawler track; 1003a. Conveyor belt; 1003b. Partition.

### DETAILED DESCRIPTION OF THE INVENTION

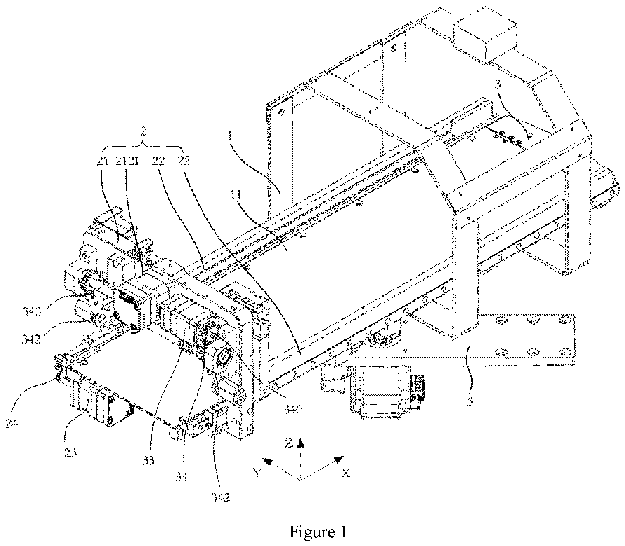

The technical solution according to the disclosure is explained in more detail below with reference to Figure 1 to 15. The description of exemplary embodiments is in fact merely illustrative and is in no way limits the disclosure and its application, or uses. The present disclosure is implemented in many different forms, not limited to the embodiments described herein. These embodiments are provided in order to make the present disclosure thorough and complete and to adequately express the scope of the present disclosure to those skilled in the art. It should be noted that: the relative arrangement of parts and steps, the composition of materials, numerical expressions and numerical values set forth in these embodiments are to be construed as merely illustrative, and not restrictive, unless specifically stated otherwise.

The use of "first", "second", and similar words in this disclosure is not intended to indicate any order, quantity, or importance, but rather is used to distinguish one element from another. The word "comprising" or "including", and the like, means that the element preceding the word comprises the element listed after the word, and does not exclude the possibility that other elements is also comprised.

In the present disclosure, when a particular device is located between a first device and a second device, intervening devices may or may not be present between the particular device and the first device or the second device. When a particular device is connected to another device, that particular device may be directly connected to the other device without intervening devices or may be directly connected to the other device with intervening devices.

All terms, comprising technical or scientific terms, used herein have the same meaning as commonly understood by one of ordinary skill in the art to which this disclosure belongs unless specifically defined otherwise. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Techniques, methods, and apparatus known to one of ordinary skill in the relevant art may not be discussed in detail, but are intended to be part of the specification where appropriate.

The dimensions of the various parts shown in the drawings are not drawn to scale. In the drawings, the same reference signs are given to the common components or the similar components, and the repeated description thereof will be omitted as appropriate.

In the description of the present disclosure, it is to be understood that the terms "center", "longitudinal", "transverse", "front", "back", "left", "right", "vertical", "horizontal", "top", "bottom", "inner", "outer", etc., indicate orientations or positional relationships based on those shown in the drawings, merely for convenience in describing this disclosure and simplifying the description, and do not indicate or imply that the device or element referred to must have a particular orientation, be constructed in a particular orientation, and be operated, and therefore, should not be taken as limiting the scope of this disclosure.

In the description of the embodiments described later, for convenience of description, referring to Figure 1, the longitudinal direction of the support member 11 is defined as a first direction X, the second direction of the support member 11 is defined as a second direction Y, and the moving direction of the first blocking member 31 is defined as a third direction W. A vertical direction perpendicular to the first direction X and the second direction Y is defined as a fourth direction Z. The movement of the first blocking member 31 is linear movement or rotation. In embodiments of this disclosure, the movement mode of the first blocking member 31 is rotation, for example, is described.

The articles access mechanism provided by some embodiments of this disclosure is used to store and pick up articles 400 in various shapes or similar items, such as: a bag-filled medicine, rectangular parallelepiped-shaped articles 400, irregular-shaped articles 400, and the like. In embodiments of this disclosure, articles 400 are taken as an example of the object to be stored and picked. The regular-shaped articles 400 in this context refer to the articles 400 with a regular shape such as rectangular parallelepiped or cylindrical, etc. The irregular-shaped articles 400 herein refer to the articles 400 such as bag-filled medicine or toothpaste, etc.

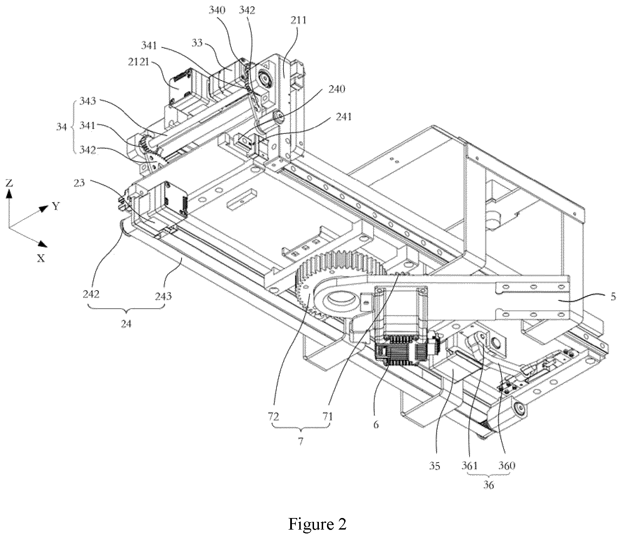

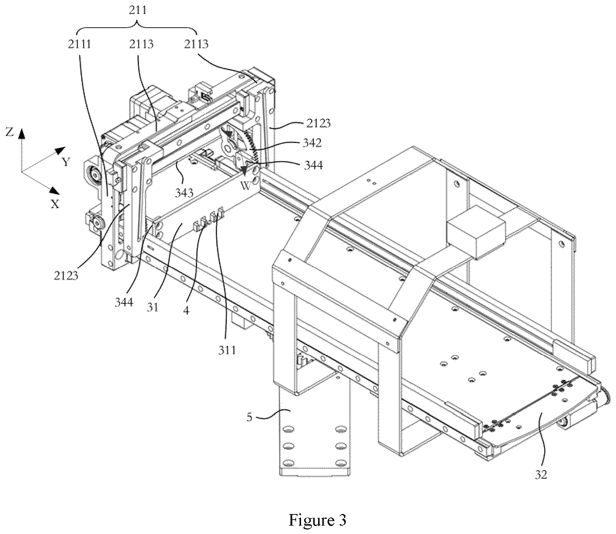

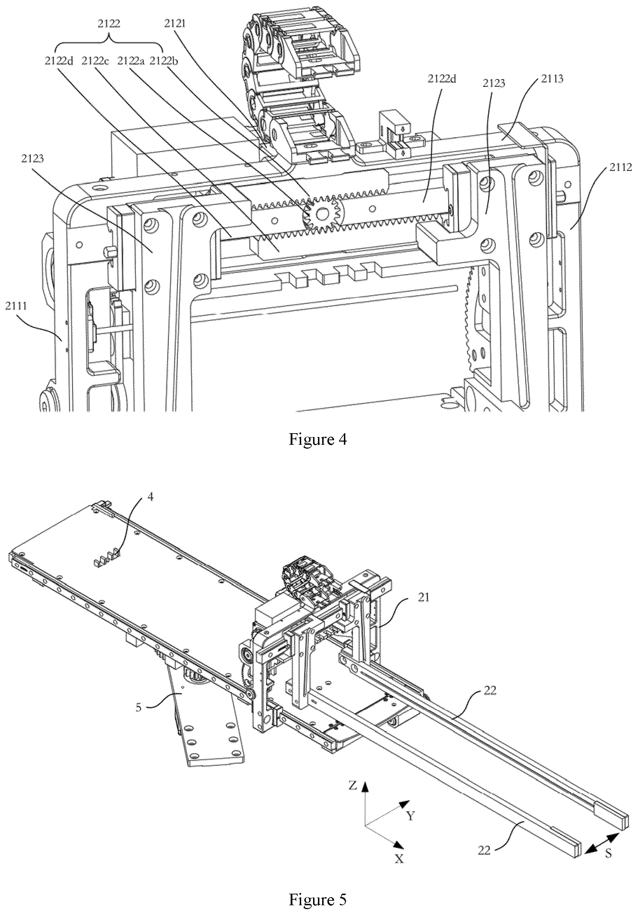

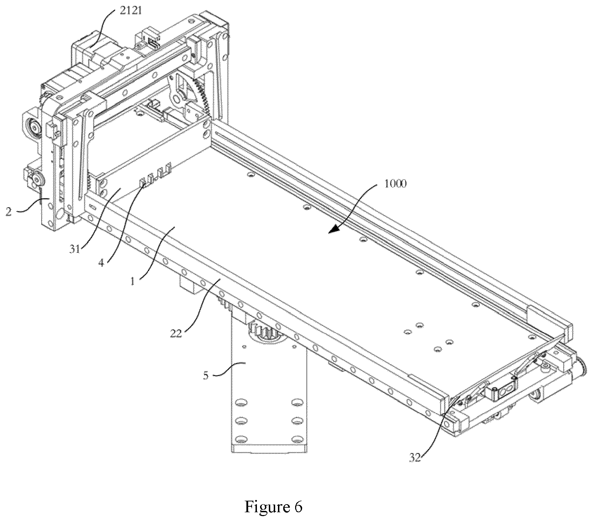

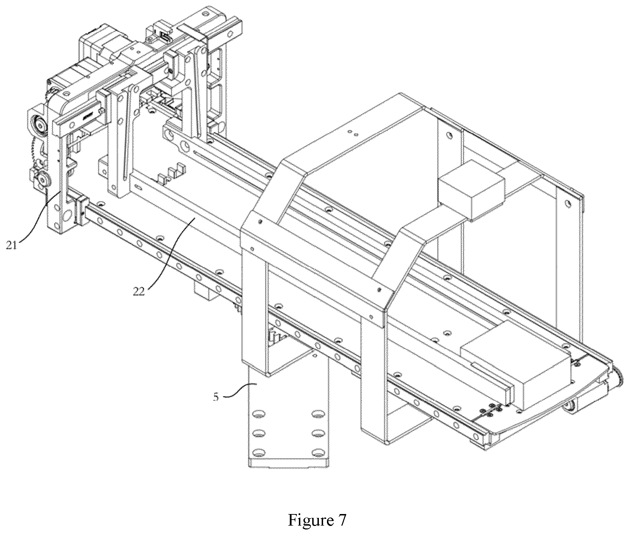

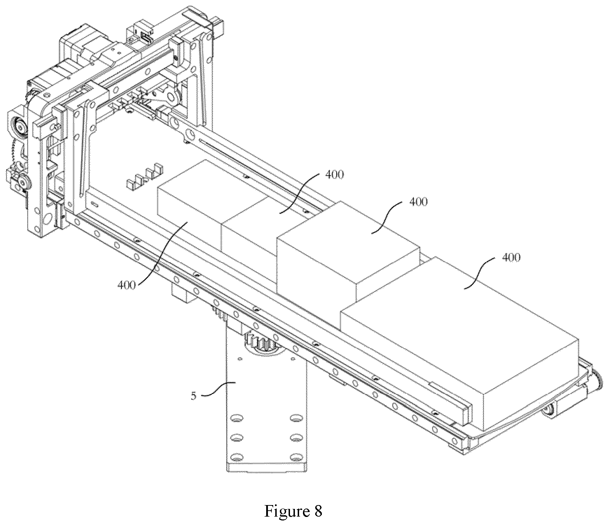

Figure 1 shows a perspective schematic view of an articles access mechanism provided in some embodiments of this disclosure. Figure 2 shows another perspective schematic view of an articles access mechanism provided in some embodiments of this disclosure. Figure 3 shows a schematic view of a yet another three-dimensional structure of an articles access mechanism provided in some embodiments of this disclosure. Figure 4 shows a schematic view of a three-dimensional structure of the sliding assembly of an articles access mechanism provided in some embodiments of this disclosure. Figure 5 shows a schematic view of an articles access mechanism provided in some embodiments of this disclosure. Figure 6 shows a schematic view of an articles access mechanism provided in some embodiments of this disclosure. Figure 7 shows a schematic view of an articles access mechanism clamping a single piece of articles 400 provided in some embodiments of this disclosure. Figure 8 shows a schematic view of an articles access mechanism clamping multiple pieces of articles 400 provided in some embodiments of this disclosure.

Referring to Figures 1-3, some embodiments of this disclosure provide an articles access mechanism, which comprises a support base 1, a clamp mechanism 2 and a blocking mechanism 3. The support base 1 comprises a support member 11. The clamp mechanism 2 comprises a sliding assembly 21, which is slidably mounted on the support member 11 in a first direction, and clamping sections 22 arranged in pair, which are movably mounted on the sliding assembly 21 in a second direction. The blocking mechanism 3 comprises a second blocking member 32, which is mounted on the support member 11, and a first blocking member 31, which is movably mounted on the sliding assembly 21 in a third direction. The first direction and the second direction herein are located in a horizontal plane and intersect with each other, and the third direction is different from the first direction and the second direction. The first direction is specifically the X direction, and the second direction is specifically the Y direction.

The support base 1 is a flat plate. The plate-shaped support member 11 has a light weight and good bearing effect, and thus has a large support area for articles 400. Besides, the edge of the support base 1 is connected to the sliding assembly 21. The sliding assembly 21 and the clamping section 22 mounted thereon are integrally moved linearly relative to the support base 1 in the first direction. The travel distance of the sliding assembly is slightly shorter than the length of the support base 1.

The clamp mechanism 2 moves in two directions: the first movement is linear movement in the X direction, which change the position of the clamping assembly relative to the support base 1, so that the clamping sections 22 of the clamp mechanism 2 extend out of the support base 1, such as the position of the sliding assembly 21 and the clamping sections 22 as illustrated in Figure 5. The second movement is the movement of a pair of clamping sections 22 in the Y direction, which changes the distance of the pair of clamping sections 22 in the Y direction, so that the articles located outside the support base 1 are clamped, such as the position of two clamping sections 22 as illustrated in Figure 5.

The blocking mechanism 3, serving to block, comprises a first blocking member 31 and a second blocking member 32.

The first blocking member 31 comprises two limit positions: a first limit position and a second limit position. When the first blocking member 31 is located at the first limit position, it abuts against or substantially abuts against the top surface of the support member 11 (in the context, "abut against" and "substantially abut against" are both regarded to be fitted with the top surface of the support member 11 by the first blocking member 31), the first blocking member 31 acts as a stopper that prevents the articles 400 on the support member 11 from falling from the side where the first blocking member 31 is located. Meanwhile, when the first blocking member 31 is located at the first limit position, in the second direction, the first blocking member 31 is located between the clamping sections 22 arranged in pair, and there is a gap between the first blocking member 31 and the two clamping sections 22. Since both clamping sections 22 will be blocked by the first blocking member 31 when they are closed, the both clamping sections 22 do not perform the closing movement in the second direction when the first blocking member 31 is at the first limit position.

When the first blocking member 31 is at the second limit position, it is lifted in various ways: it is lifted by linear movement or by rotation. In some embodiments, it is lifted by rotation, for example. The lifted first blocking member 31 moves away from the trajectory of movement of the respective clamping sections 22, and the respective clamping sections 22 move in a second direction along their respective trajectories of movement. When the two clamping sections 22 are close to each other and the distance between them becomes small, it is possible to clamp the articles 400. When the two clamping sections 22 are move away from each other and the distance between them becomes larger, and it is possible to release the articles 400. The bi-directional arrow S in Figure 5 illustrates the direction of movement of the two clamping sections 22. The bi-directional arrow S is parallel to the second direction, namely the Y direction.

The second blocking member 32 also has two states: an upright state and a lying state. When the second blocking member 32 is in the upright state, it prevents the articles 400 placed on the support member 11 from falling from the position where the second blocking member 32 is located. When the second blocking member 32 is in the lying state, the articles 400 move from the second blocking member 32 to the support member 11, or it is pushed from the second blocking member 32 out of the support member 11 by the first blocking member 31.

With continued reference to Figures 1-4, in particular Figures 3 and 4, in some embodiments, the sliding assembly 21 comprises a frame 211, a first drive 2121, a first transmission mechanism 2122, and first connectors 2123 arranged in pair. The frame 211 comprises a first column 2111, a second column 2112, and a connecting column 2113. The first column 2111 and the second column 2112 are arranged at intervals, with one end of the connecting column 2113 fixedly connected to the first column 2111 and the other end of the connecting column 2113 fixedly connected to the second column 2112; the first column 2111 slidably holds one end of the support member 11 in the second direction and the second column 2112 slidably holds the other end of the support member 11 in the second direction.

Referring to Figure 3, the frame 211 is generally U-shaped, also named portal frame. The first column 2111 and the second column 2112 are arranged in parallel. The first column 2111, the second column 2112 and the connecting column 2113 are formed as one piece or connected by welding or by screw.

Referring to Figures 2 to 4, the first drive 2121 is an electric motor. The first drive 2121 is mounted on one of the first column 2111, the second column 2112, and the connecting column 2113. In embodiments of this disclosure, the first drive 2121 is mounted on the connecting column 2113, for example. The first drive 2121 is arranged in the central position in the length direction of the connecting column 2113, as shown in Figure 4. The first transmission mechanism 2122 is fixedly connected to a power output shaft of the first drive 2121 and converts the rotation of the first drive 2121 to the linear movement of the first connector 2123. Each of the first connectors 2123 is drivingly connected to the first drive 2121 through the first transmission mechanism 2122 so as to linearly move in the second direction under the drive of the first drive 2121.

With continued reference to Figures 3 and 4, the first transmission mechanism 2122 specifically comprises a first gear 2122a, a first rack 2122b and a second rack 2122c. The first gear 2122a is fixedly connected to the output shaft of the first drive 2121; the first rack 2122b is meshed with the first gear 2122a; the second rack 2122c is meshed with the first gear 2122a and is arranged parallel to the first rack 2122b. One of the first connectors 2123 is fixedly connected to the first rack 2122b, and the other one is fixedly connected to the second rack 2122c.

When the first gear 2122a rotates in one direction, the first rack 2122b and the second rack 2122c move towards each other, the two first connectors 2123 are close to each other, and the two clamping sections are close to each other. When the first gear 2122a rotates in the opposite direction, the first rack 2122b and the second rack 2122c, the two first connectors 2123, and the two clamping sections, for each case, move away from each other. The first connector 2123 is a riser plate. The top of the first connectors 2123 is fixedly connected to the first rack 2122b and the second rack 2122c, and the bottom of the first connector 2123 is fixedly connected to the clamping sections 22. The clamping sections 22 and the first connectors 2123 perform a linear movement synchronously.

One of the first rack 2122b and the second rack 2122c is located above the first gear 2122a, and the other one is located below the first gear 2122a. Through a first gear 2122a, both the first rack 2122b and the second rack 2122c are driven to move, achieving a very compact structure and a good synchronization.

With a continued reference to Figures 3 and 4, in order to make the linear movement of the two clamping sections 22 more precise and less prone to wobbling, in some embodiments, the first transmission mechanism 2122 further comprises first guide sections 2122d arranged in pairs, which are fixedly mounted to the connecting column 2113. All the individual first guide sections 2122d are arranged side by side along a moving direction of the first rack 2122b. The first gear 2122a is located between a pair of first guide sections 2122d. Taking the direction shown in Figure 4 as an example, one of the first guide sections 2122d is located on the left side of the first gear 2122a and the other guide section 2122d is located on the right side of the first gear 2122a. One of the first connectors 2123 herein is slidably mounted to one of the first guide sections 2122d and the other of the first connectors 2123 is slidably mounted to the other first guide section 2122d. The top of the first connector 2123 is particularly provided with a groove and the first guide section 2122d is correspondingly provided with a protrusion. The groove interacts with the protrusion to achieve the guide for the linear movement of the first connector 2123.

Since the movement of the clamping section 22 is synchronized with the movement of the first connector 2123, the precise linear movement of the first connectors 2123 in the Y direction also make the movement of the clamping sections 22 in the Y direction smoother and less prone to shaking and the clamping of the articles 400 more stable and reliable.

The following describes how the clamp mechanism 2 implements linear movement and how the second blocking member 32 and the first blocking member 31 implement their state switching, respectively.

The first blocking member 31 adopts a second drive 33 and a second transmission mechanism 34 to achieve rotation and further the position switching. The clamp mechanism 2 adopts the third drive 23 and the third transmission mechanism 24 to achieve the linear movement. The second blocking member 32 adopts the fourth drive 35 and the fourth transmission mechanism 36 to achieve the position switching.

Referring to Figures 1-3 and 5, since the state switching of the first blocking member 31 is related to whether the clamping sections 22 are close to each other, the state switching manner of the first blocking member 31 is first introduced here.

In some embodiments, the blocking mechanism 3 further comprises a second drive 33 and a second transmission mechanism 34. The second drive 33 is mounted on the first column 2111, the second column 2112 or the connecting column 2113. In some embodiments, the second drive 33 is mounted to the connecting column 2113, for example. The second transmission mechanism 34 is drivingly connected to the second drive 33 so as to rotate under the drive of the second drive 33. The first blocking member 31 is mounted to the second transmission mechanism 34 to rotate in the third direction along with the second transmission mechanism 34.

Figure 3 schematically shows the direction of rotation W of the first blocking member 31. Figure 3 schematically shows the state in which the first blocking member 31 is located between a pair of clamping sections 22. In this state, the two clamping sections 22 have the maximum distance and is not close to each other due to the blockage of the first blocking member 31.

Figure 5 schematically shows the state in which the first blocking member 31 rotates to the outside the movement trajectories of the two clamping sections in the Y direction. The first blocking member 31 is lifted first, and then the distance between the two clamping sections 22 is reduced, thereby attaining the state of the two clamping sections 22 as illustrated in Figure 5. It should be noted that the movement of the entire clamp mechanism 2 in the X direction is achieved through the third drive 23 and the third transmission mechanism 24, which will be described in detail later. Here, the focus is to describe the action of the two clamping sections 22 approaching each other, and the lifted state of the first blocking member 31.

Referring to Figures 1, 3 and 5, in some embodiments, the second drive 33 is in particular such as an electric motor and is fixed to the connecting column 2113. The second transmission mechanism 34 comprises an output shaft gear 340, second gears 341 arranged in pairs, half gears 342 arranged in pairs and a connecting shaft 343. The output shaft gear 340 is fixedly connected to a power output shaft of the second drive 33. The two second gears 341 are arranged in dispersed manner and are fixedly connected to the first column 2111 and the second column 2112, respectively; or the two second gears 341 are fixedly mounted at different positions of the connecting column 2113. One of the second gears 341 is engaged with the output shaft gear 340. The second gear 341 rotates along with the power output shaft of the second drive 33 through the output shaft gear 340. The connecting shaft 343 fixedly connects the respective half gears 342 arranged in pairs or fixedly connects the two second gears 341. One of the half gears 342 is engaged with the second gear 341, to be driven by the second gear 341 to rotate. One end of the first blocking member 31 is fixedly connected with one of the half gears 342, and the other end of the first blocking member 31 is fixedly connected with the other half gear 342.

Since the first blocking member 31 (as shown in Figure 3) does not rotate, it moves until it abuts against the support member 11 and is away from the movement trajectories of the two clamping sections 22 in the Y direction, and thus the use of the half gear 342 meets the rotation requirements of the first blocking member 31. When the first blocking member 31 abuts against the support member 11, it is located between two clamping sections 22, which have the maximum distance in the Y direction.

Referring to Figure 3, to more conveniently connect the half gears 342 with the first blocking member 31, in some embodiments, the second transmission mechanism 34 further comprises third connectors 344 arranged in pairs, which correspond to and are fixedly connected to the half gears 342 one to one correspondence. Each half gear 342 is fixedly connected to one of the third connectors 344, by screw connection. The third connectors 344 are specifically such as L-shaped plate. Each half gear 342 is provided on its end face with a first screw hole and the third connector 344 is correspondingly provided with a second screw hole. The half gear 342 is fixedly connected with the third connector 344 in such a way that the screw passes through the first and second screw hole. The first blocking member 31, with its one end in the second direction, is fixedly connected to one of the third connectors 344, and with the other end in the second direction, is fixedly connected to the other third connector 344. When the first blocking member 31 is rotating, it rotates about the central axis of the half gear 342. The first blocking member 31 has fixing positions at both ends for more reliable rotation.

With continued reference to Figures 1-5, the following describes how to achieve the linear movement of the clamp mechanism 2 relative to the support member 11 in the X direction.

In some embodiments, the blocking mechanism 2 further comprises a third drive 23 and a third transmission mechanism 24. The third drive 23 is such as an electric motor. As shown in Figure 2, the third drive 23 is fixedly mounted on the bottom of the support member 11 and located at an end of the support member 11 that is not provided with a second blocking member 32. The third transmission mechanism 24 is drivingly connected to the third drive 23 and fixedly connected to the sliding assembly 21. The sliding assembly 21 is configured to move linearly in the first direction along with the third transmission mechanism 24 under the drive of the third drive 23.

The third transmission mechanism 24 is realized in various forms, such as a linear guide mechanism, a belt, a chain, or the like, with which the rotation of the third drive 23 is converted into a linear movement of the sliding assembly.

In the above-mentioned technical solutions, the third drive 23 and the third transmission mechanism 24 are arranged on the bottom of the support member 11, which does not occupy the support area of the top of the support member 11, so that the articles access mechanism picks up and place more articles 400, which is a more reasonable structure.

With a continued reference to Figure 2, in order to make the movement of the clamp mechanism 2 relative to the support member 11 more precise, stable, and less prone to wobbling, in some embodiments, the third transmission mechanism 24 comprises a first guide rail 240, a second guide section 241, a pulley 242 and a first belt 243. The first guide rail 240 is fixedly mounted at the support base 1. There are two first guide rails 240, which are distributed on two sides of the support base 1. The second guide sections 241 and the first guide rails 240 correspond to each other one to one correspondence, and the second guide sections 241 are slidably mounted on the first guide rail 240; the sliding assembly 21 is fixedly mounted on the second guide section 241. The second guide sections 241 are sliding blocks and move along the length direction of the first guide rail 240 (in the X direction). The pulley 242 is fixedly connected to the output shaft of the third drive 23. The first belt 243 is mounted on the bottom of the support base 1; the first belt 243 is meshed with the pulley 242; the sliding assembly 21 is fixedly connected to the first belt 243.

The third drive 23 rotates and drives the pulley 242 to rotate synchronously, and the first belt 243 meshed with the pulley 242 rotates accordingly. Since the sliding assembly 21 is fixedly connected to the first belt 243, the sliding assembly 21 will move linearly along with the rotation of the first belt 342. Since the sliding assembly 21 is also connected to the second guide section 241, under the guiding action of the second guide section 241 and the first guide rail 240, the sliding assembly 21 linearly moves along the first guide rail 240, i.e. in the X direction, which realizes the extension and retraction of the sliding assembly 21 relative to the support member 11.

Referring to Figures 1 to 6, the following describes how the second blocking member 32 achieves the position switching.

In some embodiments, the blocking mechanism 3 further comprises a fourth drive 35 and a fourth transmission mechanism 36. The fourth drive 35 is mounted on the support member 11, and the fourth transmission mechanism 36 is drivingly connected to the fourth drive 35. The second blocking member 32 herein is rotatably mounted at one of ends of the support member 11 in the first direction and the fourth drive 35 is drivingly connected to the second blocking member 32 to enable the second blocking member 32 to switch between the following positions: an upright state and a lying state.

Figures 1-3 are schematic view of the second blocking member 32 in the lying state and Figure 6 is a schematic view of the second blocking member 32 in the upright state. The upright state is also called lifted state.

The fourth drive 35 is such as an electric motor. The fourth transmission mechanism 36 is to convert the rotation of the fourth drive 35 to the rotation of the second blocking member 32. There is various implementation of the fourth transmission mechanism 36, such as gear drive or crank-connecting-rod-mechanism, etc.

With continued reference to Figures 1-3, Figure 2, in some embodiments, the fourth transmission mechanism 36 comprises a connecting rod 360 and a crank 361. One end of the crank 361 is fixedly connected to a power output shaft of the fourth drive 35, and the other end thereof is rotatably connected to an end of the connecting rod 360. The other end of the connecting rod 360 is rotatably connected to the second blocking member 32. The fourth drive 35 is located on the bottom of the support member 11, and the crank 361 and the connecting rod 360 are also located on the bottom of the support member 11.

When the fourth drive 35 rotates, the other end of the crank 361 is lifted, and the second blocking member 32, which is rotatably connected to the other end of the crank 361, rotates about the rotatable connection point of the second blocking member 32 itself with the support member 11 and is lifted up. The lifted second blocking member 32 is shown in Figure 6. When the second blocking member 32 is lifted up, it has the blocking function, and the articles placed on the support member 11 is not likely to fall off.

With continued reference to Figure 3, in some embodiments, the articles access mechanism further comprises a limiting member 4, which is such as a block-shaped structure. The limiting member 4 is mounted on the top surface of the support member 11 and located at an end of the support member 11 away from the second blocking member 32.

With continued reference to Figure 3, in some embodiments, the first blocking member 31 is provided with a groove 311, which is configured to avoid the limiting member 4. When the first blocking member 31 is at the first limit position, the limiting member 4 is located in the groove 311, namely the situation as shown in Figure 3.

The forgoing describes two limit positions of the first blocking member 31: a first limit position and a second limit position. The second blocking member 32 comprises two states: an upright state and a lying state. With the limiting member 4 mentioned here, the entire articles access mechanism achieves a variety of working states.

Depending on whether the articles 400 is moved to the articles access mechanism (namely the pickup operation) or the articles 400 is moved out of the articles access mechanism, articles access mechanism has two states: the pickup state and the unloading state. In combination with whether the articles 400 is a regular article or an irregular-shaped articles (also called irregular articles), the articles access mechanism has four states: a regular articles pickup state, a regular articles unloading state, an irregular-shaped articles pickup state, and an irregular-shaped articles unloading state.

The regular articles pickup state denotes moving the regular-shaped articles 400 from outside of the articles access mechanism onto the articles access mechanism. In the regular articles pickup state, the first blocking member 31 does not need to function, the first blocking member 31 is at the second limit position, and the first blocking member 31 is lifted to avoid the clamping section 22, so that the clamping sections 22 clamp the articles 400 when they are closed in the second direction. In the first direction, the first blocking member 31 is located on one side of the individual clamping sections 22 away from the second blocking member 32. In the second direction, the first blocking member 31 is located outside the movement trajectory of the clamping section 22, and the clamping sections 22 freely clamp and close in the second direction. The second blocking member 32 is in the lying state, the clamping sections 22 move in the first direction along with the sliding assembly 21 to extend out of the support base 1, and the clamping sections 22 close in the second direction to clamp the articles 400 outside the support member 11.

In the regular articles pickup state, the action process is as below: the clamping sections 22 move in the first direction along with the sliding assembly 21 to extend out of the support member 11; then, the clamping sections 22 close in the second direction to clamp the target articles 400. Subsequently, the clamping sections 22 move in the first direction along with the sliding assembly 21 to retract into the support member 11, and in this way, the articles 400 is brought onto the support member 11. The clamping sections 22 then open in the second direction to release the articles 400, which is left on the support member 11. The above actions are repeated to pick up the next articles 400. While the next articles 400 is being retracted in the first direction along with the clamping sections 22, if meeting the previous articles 400, it pushes the previous articles 400 further back in the first direction. In other words, each time articles 400 is picked up, the picked articles 400 does not have to be placed on the innermost side of the support member 11, and the next articles 400 will automatically push the previous articles 400 to move back automatically.

The regular articles unloading state denotes moving the regular-shaped articles 400 from the articles access mechanism out of the articles access mechanism. In this state, if there is only one articles 400, it is unloaded by clamping or pushing by the first blocking member 31. In case of multiple articles 400, the first blocking member 31 pushes all of them out of the support member 11 at once.

In case of unloading by clamping: the first blocking member 31 is at the second limit position, i.e. the first blocking member 31 is lifted up. And in the first direction, the first blocking member 31 is located on a side of individual clamping sections 22 away from the second blocking member 32; in the second direction, the first blocking member 31 is located outside the movement trajectory of the clamping section 22; the second blocking member 32 is in the lying state; the clamping sections 22 close in the second direction to clamp the articles 400 located on the support member 11; the clamping sections 22 move in the first direction along with the sliding assembly 21 to extend out of the support base 1, so as to deliver the clamped articles 400 outside the support member 11.

In case of unloading by clamping, the specific action process is described as below: it is not necessary to make the first blocking member 31 act, the clamping sections 22 close in the second direction to clamp the articles 400 located on the support member 11, and then the clamping sections 22 move in the first direction along with the sliding assembly 21 to deliver the clamped articles 400 out of the support member 11. The unloaded articles 400 are delivered to the packaging machine 200 for packaging or are stored at a target storage position in the first storage zone 1001 of the medicine storage cabinet 100.

In case of unloading by pushing: the first blocking member 31 is at the first limit position. In the first direction, the first blocking member located at the first limit position is located between the limiting member 4 and the second blocking member in the lying state, and the first blocking member 31 is located between the pair of clamping sections 22; wherein the first blocking member 31 moves in the first direction along with the sliding assembly 21 to push the articles 400 on the support member 11 out of the support member 11. In this mode, the clamping sections 22 do not need to move in the second direction. The entire unloading operation mainly relies on the movement of the first blocking member 31 in the first direction to push the articles 400 out.

In case of unloading by pushing, the specific action process is described as below: the clamping sections 22 do not need to move in the second direction, the first blocking member 31 is adjusted to the first limit position and avoids the limiting member 4. Then, the first blocking member 31 moves in the first direction along with the sliding assembly 21 to push the articles 400 on the support member 11 out of the support member 11. With the aforesaid operations, all of the articles 400 on the support member 11 are pushed out at once. It is also possible to push only a part of articles 400 on the support member 11 as needed, depending on when the first blocking member 31 is adjusted to the first limit position.

The irregular-shaped articles pickup state denotes moving the irregular-shaped articles 400 from the outside of the articles access mechanism onto the articles access mechanism. In this state, the first blocking member 31 is at the first limit position and the second blocking member 32 is in the upright state. Seen in the first direction, the limiting member 4 is located between the first blocking member 31 at the first limit position and the second blocking member 32 in the upright state. Seen in the second direction, the first blocking member 31 is located between the pair of clamping sections 22. In such a way, a storage frame 1000 opened on the top is enclosed between the first blocking member 31, the second blocking member 32 and a pair of clamping sections 22. The irregular-shaped articles 400 stored in the second storage zone 1002 of the medicine storage cabinet 100 is conveyed to the end by the crawler track 1003 described later, and then under the action of its own gravity, the articles 400 falls into the storage frame 1000 with the top opening, thus realizing the pickup operation of the irregular-shaped articles 400.

In the irregular-shaped articles pickup state, the action process is described as below: the first blocking member 31 is adjusted to the first limit position and the second blocking member 32 is adjusted to the upright state. After the first blocking member 31, the second blocking member 32 and a pair of clamping sections 22 enclose the storage frame 1000 with a top opening, the entire articles access mechanism is moved to the corresponding articles delivery position of the crawler track 1003. The articles 400 is conveyed to the end edge of the crawler track 1003 by using the crawler track 1003. Under the action of inertia and its own gravity, the articles 400 falls into the storage frame 1000. It is readily also possible to move the entire articles access mechanism to the corresponding articles delivery position of the crawler track 1003 first, and then to make adjustment to form a storage frame 1000.

The irregular-shaped articles unloading state denotes moving the irregular-shaped articles 400 from the articles access mechanism to the outside of the articles access mechanism. The unloading of irregular-shaped articles by pushing is the same as the unloading of regular-shaped articles by pushing. In irregular-shaped articles unloading state, the first blocking member 31 is located at the first limit position; in the first direction, the first blocking member 31 is located between the limiting member 4 and the second blocking member 32 in the lying state. Or, the first blocking member 31 at the first limit position accommodates the limiting member 4 through its own accommodating groove 311, and the first blocking member 31 is engaged with the limiting member 4, as shown in Figure 3.

In irregular-shaped articles unloading state, in the second direction, the first blocking member 31 is located between a pair of clamping sections 22. The first blocking member 31 herein moves in the first direction along with the sliding assembly 21 to push the articles 400 on the support member 11 out of the support member 11.

In irregular-shaped articles unloading state, the specific action process is described as below: the clamping sections 22 do not need to move in the second direction, the first blocking member 31 is adjusted to the first limit position and avoids the limiting member 4. Then, the first blocking member 31 moves in the first direction along with the sliding assembly 21 to push the articles 400 on the support member 11 out of the support member 11. With the aforesaid operations, all of the articles 400 on the support member 11 are pushed out at once. It is also possible to push only a part of articles 400 on the support member 11 as needed.

Both in the regular articles unloading state and the irregular-shaped articles state, the unloaded articles 400 are subsequently transported to the packaging machine 200 for packaging and then conveyed to the express delivery locker 300 for storage.

The articles access mechanism provided by the above technical solutions have a variety of working states. For the pickup operation of regular-shaped articles 400, the clamping sections 22 are used for clamping; for the unloading operation of a single regular-shaped articles 400, the clamping sections 22 are also used for clamping; for the unloading operation of multiple regular-shaped articles 400, the first blocking member 31 is used for pushing them all, which is a high-efficient unloading. For irregular-shaped articles 400, the articles access mechanism forms a storage frame 1000 with a top opening, into which the irregular-shaped articles 400 are moved directly by using external force (in particular, such as a crawler track 1003), in order to achieve the articles picking. Moreover, since there are barriers on all sides of the storage frame 1000, the irregular articles are also firmly placed on the support member 11, and the articles in any shape are not likely to fall off, i.e. the pickup operation is very reliable. The above-mentioned articles access mechanism is applied to regular-shaped and irregular-shaped articles 400. Not only the pickup operation, but also the unloading operation are realized. The articles access mechanism has more working modes and more abundant functions.

Referring to Figures 7 and 8, when the clamping section 22 clamps the next articles 400, the previous articles 400, pushed by the next articles 400, is pushed to the end of the support member 11 away from the second blocking member 32. When there are enough articles 400 on the support 11, it is possible without the blocking action of the limiting member 4 that the articles 400 are pushed down from the other end of the support member 11. Furthermore, since the first blocking member 31 is swiveling, and if the articles 400 are located on the swiveling path of the first blocking member 31, the first blocking member 31 will not be able to swivel normally or realize the normal position switching. Thus, the aforesaid situation is avoided by providing a limiting member 4. There is provided a plurality of limiting members 4, which are arranged in the Y direction in the dispersed manner so as to better limit the limit position of the movement of the articles 400 on the support member 11.

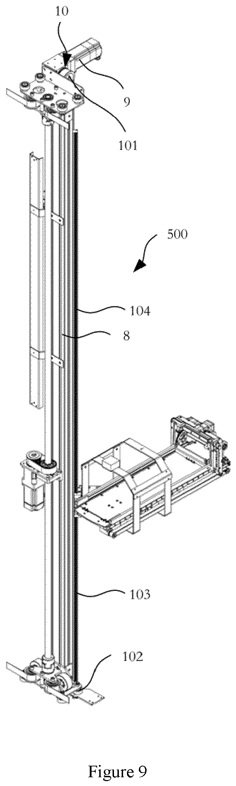

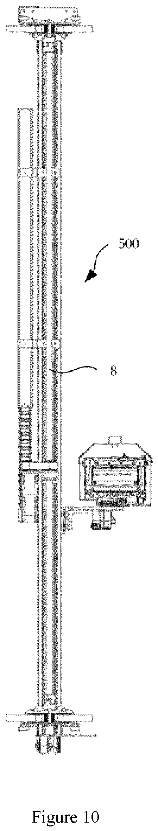

Figure 9 shows a schematic view of a three-dimensional structure of the articles access robot provided in some embodiments of this disclosure. Figure 10 shows a schematic view of another three-dimensional structure of the articles access robot provided in some embodiments of this disclosure.

Referring to Figures 1, 2, 9 and 10, some embodiments of this disclosure further provide an articles access robot 500, which comprises a pallet arm 5 and the articles access mechanism according to any one of the technical solutions of this disclosure, which is rotatably mounted on the pallet arm 5.

The pallet arm 5 is used for mounting the articles access mechanism which is rotatable relative to the pallet arm 5, so as to enable storage and pickup of articles 400 from different directions.

Referring to Figures 2, 9 and 10, in some embodiments, the articles access robot further comprises a fifth drive 6 and a fifth transmission mechanism 7. The fifth drive 6 is mounted on the pallet arm 5; the fifth transmission mechanism 7 is drivingly connected to the fifth drive 6 and is fixedly connected to the articles access mechanism to enable the articles access mechanism to rotate under the drive of the fifth drive 6.

The fifth drive 6 is, for example, an electric motor, and the fifth transmission mechanism 7 converts the rotation of the electric motor to the rotation of the articles access mechanism. There are various implementation of the fifth transmission mechanism 7, such as a gear mechanism or a swivel seat, etc.

With continued reference to Figures 2, 9 and 10, in some embodiments, the fifth transmission mechanism 7 comprises a third gear 71 and a fourth gear 72. The third gear 71 is fixedly connected to a power output shaft of the fifth drive 6; the third gear 71 is mounted on the pallet arm 5; the fourth gear 72 is mounted on the bottom of the support base 1 and is meshed with the third gear 71.

In the above implementation, the fifth transmission mechanism 7 is located on the bottom of the support member 11 and does not occupy the space on the top of the support member 11, and the fifth transmission mechanism 7 adopts the gear meshing to achieve rotation, which accurately controls the rotation angle and the rotation timing.

Referring to Figures 9 and 10, in some embodiments, the articles access robot further comprises a support column 8, a sixth drive 9 and a sixth transmission mechanism 10. The sixth drive is mounted on the support column 8. The sixth transmission mechanism 10 is drivingly connected to the sixth drive 9, and the sixth transmission mechanism 10 is fixedly connected to the pallet arm 5 to enable the articles access mechanism to move along the support column 8 under the drive of the sixth drive 9.

The support column 8 is a vertical track, for example. The articles access mechanism walks along the support column 8 and realizes the lifting and lowering of the articles access mechanism.

In some embodiments, the sixth transmission mechanism 10 comprises a first synchronous wheel 101, a second synchronous wheel 102, a synchronous belt (not shown), a second guide rail 104 and a third guide section (not shown). The first synchronous wheel 101 is mounted at one end of the support column 8; the first synchronous wheel 101 is fixedly connected to a power output shaft of the sixth drive 9; the second synchronous wheel 102 is mounted at the other end of the support column 8. The synchronous belt is tensioned by the first synchronous wheel 101 and the second synchronous wheel 102; the articles access mechanism is fixedly mounted on the synchronous belt to move up and down as the synchronous belt rotates; the second guide rail 104 is mounted to the support column 8, and the third guide section (in particular, such as a sliding block) is slidably mounted on the second guide rail, and the articles access mechanism is fixedly mounted on the third guide section.

The lifting and lowering movement of the articles access mechanism is realized by the first synchronous wheel 101, the second synchronous wheel 102 and the synchronous belt, and the lifting and lowering movement of the articles access mechanism is made smoother by the second guide rail 104 and the third guide section.

Referring to Figures 9 and 10, in some embodiments, the articles access robot further comprises a walking mechanism 12 that is mounted on the support column 8 to enable the support column 8 to walk in the medicine storage cabinet 100.

The articles access robot is mounted in the medicine storage cabinet 100, in which a walking track is arranged. The articles access robot as a whole walk along the walking track. The walking track is, for example, a horizontal track.

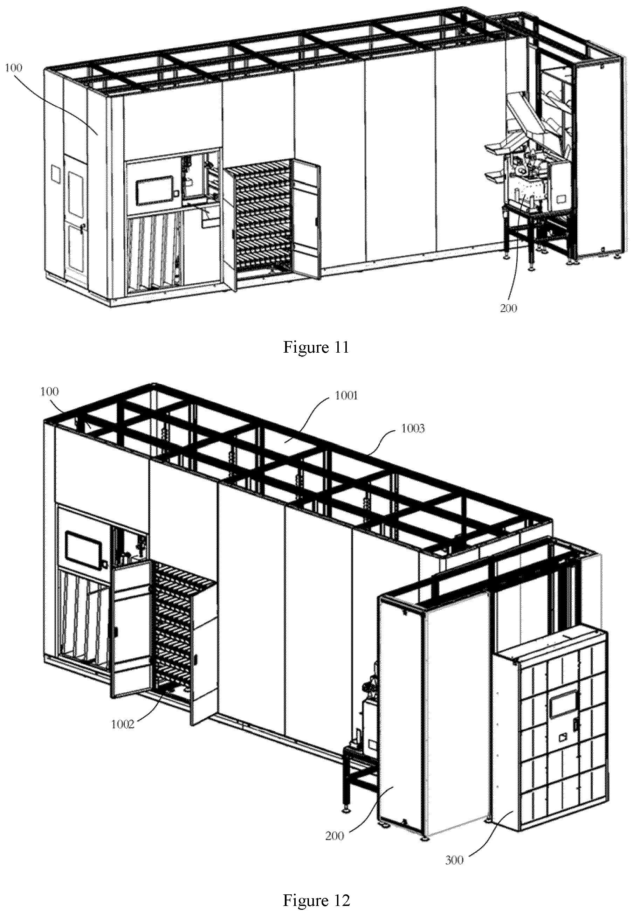

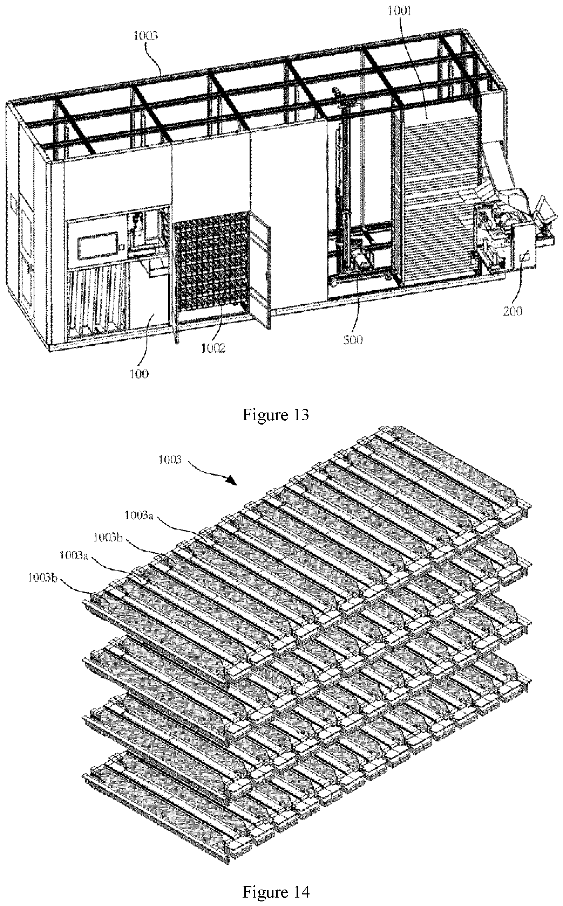

Figure 11 shows a schematic view of a three-dimensional structure of an articles access system provided in some embodiments of this disclosure. Figure 12 shows a schematic view of another three-dimensional structure of an articles access system provided in some embodiments of this disclosure. Figure 13 shows a schematic view of another three-dimensional structure of an articles access system provided in some embodiments of this disclosure.

Referring to Figures 11 to 14, some embodiments of this disclosure further provide an articles access system, comprising an articles access robot according to any one of the technical solutions of this disclosure.

In some embodiments, the articles access system further comprises a medicine storage cabinet 100 with a first storage zone 1001 and a second storage zone 1002, wherein the first storage zone 1001 is configured to clamp articles 400 by using the articles access robot so as to store and pick up articles, and the second storage zone 1002 is configured to deliver articles 400 to the articles access robot.

The first storage zone 1001 is used for storing regular-shaped articles 400 and the second storage zone 1002 is used for storing the irregular-shaped articles 400. The first storage zone 1001 adopts the laminated storage structure. The second storage zone 1002 realizes the transport of articles 400 by means of an active articles lane or a tracked articles lane. Articles are directly stored on the active articles lane or the tracked articles lane in the second storage zone 1002. After articles 400 were placed in the second storage zone 1002, they are automatically moved out of the second storage zone 1002 under the transportation of the active articles lane or the tracked articles lane.

Figure 14 shows a schematic view of the structure at the tracked articles lane. The crawler track 1003 comprises one or more sets of conveyor belts 1003a, and each of the sets comprises one or more conveyor belts. Individual conveyor belts 1003 are arranged side by side or in parallel. Each set of conveyor belts 1003 is driven independently, does not interfere with each other and works independently of each other. Two adjacent sets of conveyor belts 1003 are separated by a partition 1003b, in order to facilitate the storage of irregular-shaped articles 400. If it is necessary to restock articles on the crawler track 1103, irregular-shaped articles 400 are manually placed on the conveyor belt 1003a. When the articles access robot needs to pick up articles from the second storage zone 1002, the conveyor belt 1003a where the articles to be picked up is activated and conveys the irregular-shaped articles 400 to the end of the conveyor belt 1003a, the irregular-shaped articles 400 fall into the storage frame 1000 enclosed by the articles access robot. Since there are blockage around the storage frame 1000, the irregular-shaped articles 400 stay stably in the storage frame 1000 and do not fall easily therefrom.

The articles access robot does not only store or pick up articles 400 in or from the first storage zone 1001, but also receive the delivered articles 400 from the second storage zone 1002. The working modes of the articles access robot are very abundant.

With continued reference to Figures 11-13, in some embodiments, the articles access system further comprises a packaging machine 200, which is located downstream of the medicine storage cabinet 100 to package the articles 400 picked out of the medicine storage cabinet 100 by the articles access robot.

The above technical solutions realize automatic pickup and automatic packaging. The articles access system has a high degree of intelligence and high efficiency.

In some embodiments, the articles access system further comprises an express delivery locker 300, which is located downstream of the packaging machine 200 to store the articles 400 packaged by the packaging machine 200.

In particular, in combination with the aforesaid four states of the articles access mechanism (a regular articles pickup state, a regular articles unloading state, an irregular-shaped articles pickup state, and an irregular-shaped articles unloading state), according to the interaction relationship between the articles access mechanism and the medicine access cabinet 100, with the articles access mechanism as the main object of description, then:
The regular articles pickup state means: articles 400 are delivered by the articles access mechanism from the first storage zone 1001 onto the support member 11 of the articles access mechanism.

The regular articles unloading state means: articles 400 are pushed or clamped by the articles access mechanism out of the support member 11. The delivered articles 400 are delivered to the downstream packaging machine 200 for automatic packaging.

The irregular-shaped articles pickup state means: articles 400 are actively delivered from the second storage zone 1002 and fall into the storage frame 1000 formed by the articles access mechanism.

The irregular-shaped articles unloading state means: articles 400 are pushed by the articles access mechanism out of the support member 11. The pushed articles 400 are delivered to the downstream packaging machine 200 for automatic packaging.

Taking the medicine storage cabinet 100 as the main object of description, the articles access system has the following functions:
The first function: the regular articles 400 are stored in the first storage zone 1001 of the medicine storage cabinet 100. In particular, the articles access robot picks up articles 400 from the medicine picker, the clamping sections 22 of the articles access mechanism clamp the articles 400 from the medicine picker, and the clamped articles 400 are placed on the support member 11 of the articles access mechanism. Then, the articles access robot moves the articles access mechanism to the target storage position of the first storage zone 1001 of the medicine storage cabinet 100. The clamping sections 22 of the articles access mechanism clamp the articles 400 from the support member 11 of the articles access mechanism and place them in the target storage position of the first storage zone 1001.

The second function: the regular articles 400 are picked out of the first storage zone 1001 of the medicine storage cabinet 100. The first blocking member 31 of the articles access mechanism is adjusted to the second limit position first, and the clamping sections 22 extend to the target storage position of the first storage zone 1001 of the medicine storage cabinet 100, and they are closed so as to pick the articles 400 out of the target storage position of the first storage zone 1001. The picked articles 400 move in the first direction along with the clamping sections 22 and are conveyed to the support member 11 of the articles access mechanism. The articles 400 picked out of the medicine storage cabinet 100 are subsequently delivered to the packaging machine 200 described later and are then conveyed to the express delivery locker 300 after they have been packaged by the packaging machine 200.

The third function: the irregular-shaped articles 400 are stored in the second storage zone 1002 of the medicine storage cabinet 100. In particular, the irregular-shaped articles 400 are manually placed in the second storage zone 1002 of the medicine storage cabinet 100.

The fourth function: the irregular-shaped articles 400 are picked out of the second storage zone 1002 of the medicine storage cabinet 100. The articles access mechanism is adjusted to the irregular-shaped articles pickup state first, and then the crawler track corresponding to the target articles in the second storage zone 1002 is activated. The crawler track transports the articles 400 out of the second storage zone 1002 of the medicine storage cabinet 100, and then under the action of their own gravity, the articles 400 fall into the storage frame 1000 of the articles access mechanism. The picked articles 400 are then conveyed to the packaging machine 200 along with the articles access mechanism, and then the articles access mechanism is switched to the irregular-shaped articles unloading state, so that the first blocking member 31 pushes the irregular-shaped articles 400 into the packaging machine 200. The packaged articles 400 are conveyed to the express delivery locker 300 for storage.

The above technical solutions realize automatic storage of the articles 400 in the express delivery locker 300 after being packaged. The articles access system has a high degree of intelligence and high efficiency.

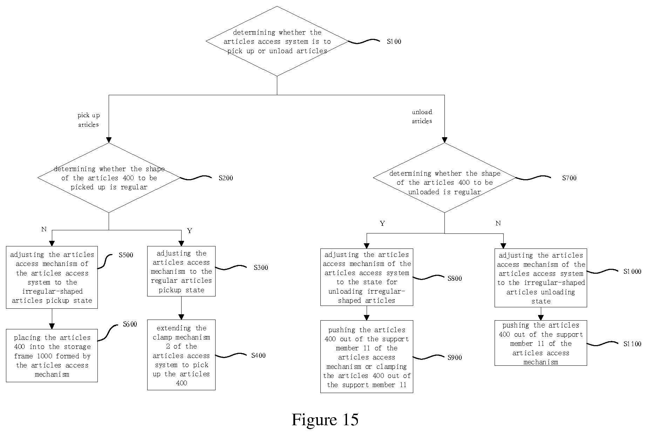

Referring to Figure 15, some embodiments of this disclosure further provide a method for picking up and unloading articles, which is implemented using the articles access system provided by any one of the above technical solutions, comprising the steps of:
Step S100, determining whether the articles access system is to pick up or unload articles.

The articles access robot of the articles access system determines whether an articles pickup operation or an articles storage operation is required according to the received instructions.

Step S200, if the articles access system is to pick up articles, determining whether the shape of the articles 400 to be picked up is regular.

The regular-shaped articles 400 are stored in the first storage zone 1001 and the irregular-shaped articles 400 are stored in the second storage zone 1002. Different shapes of articles 400 correspond to different pickup operations.

Step S300, if the shape of the articles 400 is regular, adjusting the articles access mechanism to the regular articles pickup state.

When the articles access mechanism is in the regular articles pickup state, the first blocking member 31 is at the second limit position, and the first blocking member 31 is lifted to avoid the clamping section 22, so that the clamping sections 22 clamp the articles 400 when they are closed in the second direction. In the first direction, the first blocking member 31 is located on one side of the individual clamping section 22 away from the second blocking member 32. In the second direction, the first blocking member 31 is located outside the movement trajectory of the clamping section 22, and the clamping sections 22 freely retract and close in the second direction. The second blocking member 32 is in the lying state, the clamping sections 22 move in the first direction along with the sliding assembly 21 to extend out of the support base 1, and the clamping sections 22 close in the second direction to clamp the articles 400 outside the support member 11.

Both boxed and bottled medicines are regular-shaped articles. The articles access mechanism operates to the articles storage position on the target layer according to the detected actual distance to the medicine closest to the medicine picker from the target position. According to the medicine width recorded in the system, the articles access mechanism adjusts the width of the clamping sections until it extends into the gap in the storage position, and then extends to the target medicine according to the detected actual distance, and then adjusts the width of the two clamping sections to the distance in which the articles are the clamped tightly, and then retracts the clamping sections and delivers the articles onto the support member 11. The articles access mechanism picks up one piece of medicine at a time, and also picks up multiple pieces of the same medicine in the storage positions in same column at a time. The picked articles are pushed inward by the articles picked up later. The articles with different sizes and specifications are picked up one to one correspondence in ascending order of the width of the articles, so as to prevent the medicines that are temporarily stored on the support member 11 from affecting the adjustment of the width of the clamping sections 22.

Step S400, extending the clamp mechanism 2 of the articles access system to pick up the articles 400. The clamp mechanism 2 that is clamping the articles 400 is moved in the first direction, thereby realizing the delivery of the articles 400 onto the support member 11.

In the above step S400, in particular, the clamping sections 22 move in the first direction along with the sliding assembly 21 to extend out of the support member 11; then, the clamping sections 22 close in the second direction to clamp the target articles 400. Subsequently, the clamping sections 22 move in the first direction along with the sliding assembly 21 to retract into the support member 11, and in this way, the articles 400 is brought onto the support member 11. The clamping sections 22 then open in the second direction to release the articles 400, which is left on the support member 11. The above actions are repeated to pick up the next articles 400. While the next articles 400 is being retracted in the first direction along with the clamping sections 22, if it meets the previous articles 400, it pushes the previous articles 400 further back in the first direction. In other words, each time an articles 400 is picked up, the picked up articles 400 does not have to be placed on the innermost side of the support member 11, and the next articles 400 will automatically push the previous articles 400 to move back automatically.

In some embodiments, the method for picking up and unloading articles further comprises the step of:
Step S500, if the shape of the articles 400 is irregular, adjusting the articles access mechanism of the articles access system to the irregular-shaped articles pickup state.

When the articles access mechanism is in the irregular-shaped articles pickup state, as shown in Figure 6, it corresponds to the pickup operation of irregular-shaped articles 400. In this state, the first blocking member 31 is at the first limit position and the second blocking member 32 is in the upright state. Seen in the first direction, the limiting member 4 is located between the first blocking member 31 at the first limit position and the second blocking member 32 in the upright state. Seen in the second direction, the first blocking member 31 is located between the pair of clamping sections 22. In such a way, a storage frame 1000 with a top opening is enclosed between the first blocking member 31, the second blocking member 32 and a pair of clamping sections 22.

Step S600, placing the articles 400 into the storage frame 1000 formed by the articles access mechanism.

In the step S600, the irregular-shaped articles 400 stored in the second storage zone 1002 of the medicine storage cabinet 100 is conveyed to the end by the crawler track 1003, and then under the action of its own gravity, the articles 400 falls into the storage frame 1000 with a top opening, thus realizing the pickup operation of the irregular-shaped articles 400.

In some embodiments, the method for picking up and unloading articles further comprises the step of:
Step S700, if the articles access system is to unload an article, determining whether the shape of the articles 400 to be unloaded is regular.

Step S800, if the shape of the articles 400 is irregular, adjusting the articles access mechanism of the articles access system to the state for unloading irregular-shaped articles.

As described above, the regular articles unloading state denotes moving the regular-shaped articles 400 from the articles access mechanism to the outside of the articles access mechanism. In this state, if there is only one articles 400, the articles are unloaded by clamping or pushing by the first blocking member 31. In case of multiple articles 400, the first blocking member 31 pushes all of them out of the support member 11 at once.

Step S900, pushing the articles 400 out of the support member 11 of the articles access mechanism or clamping the articles 400 out of the support member 11.

For the situation where the articles is unloaded by clamping: the first blocking member 31 is at the second limit position, i.e. the first blocking member 31 is lifted up. And in the first direction, the first blocking member 31 is located on a side of individual clamping sections 22 away from the second blocking member 32; in the second direction, the first blocking member 31 is located outside the movement trajectory of the clamping section 22; the second blocking member 32 is in the lying state; the clamping sections 22 close in the second direction to clamp the articles 400 located on the support member 11; the clamping sections 22 move in the first direction along with the sliding assembly 21 to extend out of the support base 1, so as to deliver the clamped articles 400 out of the support member 11.

In case of unloading by clamping, the specific action process is described as below: it is not necessary to make the first blocking member 31 act, the clamping sections 22 close in the second direction to clamp the articles 400 located on the support member 11, and then the clamping sections 22 move in the first direction along with the sliding assembly 21 to deliver the articles 400 out of the support member 11. The unloaded articles 400 are delivered to the packaging machine 200 for packaging or are stored at a target storage position in the first storage zone 1001 of the medicine storage cabinet 100.

In case of unloading by pushing: the first blocking member 31 is at the first limit position. In the first direction, the first blocking member 31 located at the first limit position is located between the limiting member 4 and the second blocking member 32 in the lying state, and the first blocking member 31 is located between the pair of clamping sections 22; wherein the first blocking member 31 moves in the first direction along with the sliding assembly 21 to push the articles 400 on the support member 11 out of the support member 11. In this mode, the clamping sections 22 do not need to move in the second direction. The entire unloading mainly relies on the movement of the first blocking member 31 in the first direction to push the articles 400 out.

In case of unloading by pushing, the specific action process is described as below: the clamping sections 22 do not need to move in the second direction, the first blocking member 31 is adjusted to the first limit position and avoids the limiting member 4. Then, the first blocking member 31 moves in the first direction along with the sliding assembly 21 to push the articles 400 on the support member 11 out of the support member 11. With the aforesaid operations, all of the articles 400 on the support member 11 are pushed out at once. It is also possible to push only a part of articles 400 on the support member 11 as needed, depending on when the first blocking member 31 is adjusted to the first limit position.

In the above step S900, the articles 400 pushed from the support member 11 are delivered to the downstream packaging machine 200 for packaging. The clamped articles 400 are delivered in two directions according to different needs: firstly, it is delivered to the downstream packaging machine 200 for packaging; secondly, it is placed at a target storage position in the first storage zone 1001 of the medicine storage cabinet 100.

For irregular articles 400, the following unloading operations are implemented:
In particular, the method for picking up and unloading articles further comprises the step of:
Step S1000, if the shape of the articles 400 is irregular, adjusting the articles access mechanism of the articles access system to the irregular-shaped articles unloading state.

The irregular-shaped articles unloading state is the same as the unloading operation of regular-shaped articles by pushing. In the irregular-shaped articles unloading state, the first blocking member 31 is located at the first limit position; in the first direction, the first blocking member 31 is located between the limiting member 4 and the second blocking member 32 in the lying state, and the first blocking member 31 is located between a pair of clamping sections 22. The first blocking member 31 herein moves in the first direction along with the sliding assembly 21 to push the articles 400 on the support member 11 out of the support member 11.

Step S1100, pushing the articles 400 out of the support member 11 of the articles access mechanism. In particular, the first blocking member 31 moves in the first direction to push the articles 400 out.

In the above step S1100, in irregular-shaped articles unloading state, the clamping sections 22 do not need to move in the second direction, the first blocking member 31 is adjusted to the first limit position and avoids the limiting member 4. Then, the first blocking member 31 moves in the first direction along with the sliding assembly 21 to push the articles 400 on the support member 11 out of the support member 11. With the aforesaid operations, all of the articles 400 on the support member 11 are pushed out at once. It is also possible to push only a part of articles 400 on the support member 11 as needed, depending on when the first blocking member 31 is adjusted to the first limit position.

After the step S1100, the pushed articles 400 is transported to the packaging machine for packaging and after being packaged, it is conveyed to the express delivery locker 300 for storage.

Some embodiments of this disclosure provide an articles access device, comprising a memory and a process coupled to the memory, wherein the processor is configured to implement the method for picking up and unloading articles according to any one of the above embodiments based on the instructions stored in the memory.

The memory comprises a system memory, a fixed non-volatile storage media and the like. The system memory stores, for example, an operating system, application programs, a Boot Loader, and other programs.

Some embodiments of this disclosure further provide a computer-readable storage medium with a computer program stored thereon, wherein the above method for picking up and unloading articles according to any one of the above embodiments is implemented when the program is executed by the processor.

The processor described herein comprises general-purpose processors, Digital Signal Processors (DSPs), Application Specific Integrated Circuits (ASICs), Field Programmable Gate Arrays (FPGAs) or other programmable logic devices, discrete gates or transistor logic, discrete hard articles components, or any combination thereof designed to perform the functions described herein. A general-purpose processor is a microprocessor, but in alternatives, the processor is any conventional processor, controller, microcontroller, or state machine. The processor also is implemented as a combination of computing devices, such as a combination of a DSP and a microprocessor, a plurality of microprocessors, one or more microprocessors cooperating with a DSP core, or any other such configuration.

The storage medium is any available medium that is accessed by a computer. By way of example and not limitation, such computer-readable media comprises RAM, ROM, EEPROM, CD-ROM or other optical disk storage, disk storage or other magnetic storage devices, or any other media that is used to carry or store consensual program code in the form of instructions or data structures and that can be accessed by a computer. Any connection is also properly termed a computer-readable medium. For example, if the soft articles is transmitted from a website, server, or other remote source using coaxial cables, fiber optic cables, twisted pair wires, Digital Subscriber Lines (DSL), or wireless technologies such as infrared, radio, and microwave, then the coaxial cables, fiber optic cables, twisted pair wires, DSL, or wireless technologies such as infrared, radio, and microwave are comprised in the definition of the medium. As used herein, disks and discs comprise Compact Discs (CDs), laser discs, optical discs, Digital Versatile Discs (DVDs), floppy disks, and Blu-ray discs, where disks typically reproduce data magnetically, while discs reproduce data optically using a laser. Combinations of the above should also be comprised within the scope of computer-readable media.

It will be appreciated by those skilled in the art that the method embodiments of this disclosure is provided as a method, system, or computer program product. Accordingly, the present disclosure takes the form of an entirely hard articles embodiment, an entirely soft articles embodiment or an embodiment combining soft articles and hard articles aspects. Furthermore, this disclosure takes the form of a computer program product implemented on one or more computer-usable non-transitory storage media (comprising, but not limited to, disk storage, CD-ROM, optical storage, etc.) containing computer-usable program code.

This disclosure is described with reference to flowcharts and/or block diagrams of methods, apparatuses (systems), and computer program products according to some embodiments of this disclosure. It will be appreciated that each block in the flowcharts and/or block diagrams and combinations of blocks in the flowcharts and/or block diagrams can be implemented by computer-readable program instructions. These computer program instructions are provided to the processor of a general-purpose computer, special-purpose computer, embedded processor, or other programmable data processing apparatus to produce a machine, such that the instructions, when executed by the processor of the computer or other programmable data processing apparatus, create means for implementing the functions specified in one or more processes of the flowchart and/or one or more blocks of the block diagram.

These computer program instructions can also be stored in a computer-readable memory that can direct a computer or other programmable data processing device to operate in a specific manner, such that the instructions stored in the computer-readable memory produce an article of manufacture comprising instruction means that implement the functions specified in one or more processes of the flowchart and/or one or more blocks of the block diagram.

These computer program instructions can also be loaded onto a computer or other programmable data processing device, so as to execute a series of operational steps on the computer or other programmable device to generate a computer-implemented processing, thereby the instructions executed on the computer or other programmable device provide the steps for implementing the functions specified in one or more processes of the flowchart and/or one or more blocks of the block diagram.

Finally, it should be noted that the above embodiments are only used for describing rather than limiting the technical solutions of the present disclosure. Although the present disclosure is described in detail with reference to the preferred embodiments, those of ordinary skill in the art should understand that they still can make modifications to the specific implementations in the present disclosure or make equivalent substitutions to part of technical features thereof.

## Claims

1. An articles access mechanism, comprising:
a support base (1) comprising a support member (11);
a clamp mechanism (2) comprising a sliding assembly (21), which is slidably mounted on the support member (11) in a first direction, and clamping sections (22) arranged in pair, which are movably mounted on the sliding assembly (21) in a second direction; and
a blocking mechanism (3) comprising a first blocking member (31), which is movably mounted on the sliding assembly (21) in a third direction, and a second blocking member (32), which is mounted on the support member (11);
wherein the first direction and the second direction are in a horizontal plane and intersect with each other, and the third direction is different from the first direction and the second direction.

2. The articles access mechanism according to claim 1, wherein the sliding assembly (21) comprises:
a frame (211) comprising a first column (2111), a second column (2112), and a connecting column (2113); the first column (2111) and the second column (2112) being arranged at intervals, with one end of the connecting column (2113) fixedly connected to the first column (2111) and the other end of the connecting column (2113) fixedly connected to the second column (2112); the first column (2111) slidably holding one end of the support member (11) in the second direction and the second column (2112) slidably holding the other end of the support member (11) in the second direction;
a first drive (2121) mounted on one of the first column (2111), the second column (2112), and the connecting column (2113);
a first transmission mechanism (2122); and
first connectors (2123) arranged in pairs; each of the first connectors (2123) being drivingly connected to the first drive (2121) through the first transmission mechanism (2122) to move in the second direction under the drive of the first drive (2121).

3. The articles access mechanism according to claim 2, wherein the first transmission mechanism (2122) comprises:
a first gear (2122a) fixedly connected to an output shaft of the first drive (2121);
a first rack (2122b) meshed with the first gear (2122a); and
a second rack (2122c) meshed with the first gear (2122a) and arranged parallel to the first rack (2122b);
wherein one of the first connectors (2123) is fixedly connected to the first rack (2122b), and the other first connector (2123) is fixedly connected to the second rack (2122c);
or wherein the blocking mechanism (3) further comprises:
a second drive (33) mounted on the first column (2111), the second column (2112) or the connecting column (2113); and
a second transmission mechanism (34) drivingly connected to the second drive (33) so as to rotate under the drive of the second drive (33);
wherein the first blocking member (31) is mounted to the second transmission mechanism (34) to rotate in the third direction along with the second transmission mechanism (34).

4. The articles access mechanism according to claim 3, wherein the first transmission mechanism (2122) further comprises:
first guide sections (2122d) arranged in pairs and fixedly mounted to the connecting column (2113), all of the first guide sections (2122d) being arranged side by side along a moving direction of the first rack (2122b), the first gear (2122a) being located between the pair of first guide sections (2122d);
wherein one of the first connectors (2123) is slidably mounted to one of the first guide sections (2122d) and the other of the first connectors (2123) is slidably mounted to the other of first guide sections (2122d); wherein the one of the clamping sections (22) is fixedly connected with the one of the first connectors (2123), and the other clamping sections (22) is fixedly connected with the other of the first connectors (2123).

5. The articles access mechanism according to claim 3, wherein the second transmission mechanism (34) comprises:
an output shaft gear (340) fixedly connected to the power output shaft of the second drive (33);
second gears (341) arranged in pairs, one of the second gears (341) being engaged with the output shaft gear (340);
half gears (342) arranged in pairs, the half gears (342) corresponding to and engaged with the second gears (341) one by one so as to be driven by the second gear (341) to rotate; and
a connecting shaft (343) fixedly connecting the respective half gears (342) arranged in pairs or fixedly connecting the two second gears (341);
wherein one end of the first blocking member (31) is fixedly connected with one of the half gears (342), and the other end of the first blocking member (31) is fixedly connected with the other half gear (342).

6. The articles access mechanism according to any one of claims 1-5, wherein the first blocking member (31) comprises a first limit position and a second limit position;
the first blocking member (31) is located between the clamping sections (22) arranged in pairs in the second direction when the first blocking member (31) is at the first limit position; the first blocking member (31) is configured to push articles (400) out of the support member (11) as the sliding assembly (21) moves in the first direction; or, the first blocking member (31) is configured to block the articles (400) to prevent the articles (400) from falling from an end of the support member (11) where the first blocking member (31) is provided;
the first blocking member (31) is located outside the movement trajectory of each clamping section (22) in the second direction when the first blocking member (31) is at the second limit position, and the clamping sections (22) are movable in the second direction;
or wherein the clamp mechanism (2) further comprises:
a third drive (23) mounted on the bottom of the support member (11), and
a third transmission mechanism (24) drivingly connected to the third drive (23) and fixedly connected to the sliding assembly (21); the sliding assembly (21) is configured to move linearly in the first direction along with the third transmission mechanism (24) under the drive of the third drive (23);
or wherein the third transmission mechanism (24) comprises:
a first guide rail (240) fixedly mounted at the support base (1),
a second guide section (241) slidably mounted on the first guide rail (240); the sliding assembly (21) being fixedly mounted on the second guide section (241);
a pulley (242) fixedly connected to an output shaft of the third drive (23);
a first belt (243) mounted on the bottom of the support base (1); the first belt (243) being meshed with the pulley (242); the sliding assembly (21) being fixedly connected to the first belt (243);
or wherein the blocking mechanism (3) further comprises:
a fourth drive (35) mounted on the support member (11), and
a fourth transmission mechanism (36) drivingly connected to the fourth drive (35);
wherein the second blocking member (32) is rotatably mounted at one of ends of the support member (11) in the first direction, and the fourth drive (35) is drivingly connected to the second blocking member (32) to enable the second blocking member (32) to switch between the following positions: an upright state and a lying state;
or wherein the fourth transmission mechanism (36) comprises:
a crank (361), one end of which is fixedly connected to a power output shaft of the fourth drive (35); and
a connecting rod (360), one end of which is rotatably connected to the other end of the crank (361), and the other end of which is rotatably connected to the second blocking member (32);
wherein the fourth drive (35) is located on the bottom of the support member (11), and the crank (361) and the connecting rod (360) are also located on the bottom of the support member (11).

7. The articles access mechanism according to any one of claims 1-5, further comprising:
a limiting member (4) mounted on the support member (11) and located at an end of the support member (11) away from the second blocking member (32).

8. The articles access mechanism according to claim 7, wherein the first blocking member (31) is provided with a groove (311) to avoid the limiting member (4); wherein the limiting member (4) is located in the groove (311), when the first blocking member (31) is at a first limit position.

9. The articles access mechanism according to claim 8, wherein the articles access mechanism having an irregular-shaped articles pickup state:
in the first direction, the limiting member (4) is located between the first blocking member (31) at a first limit position and the second blocking member (32) in an upright state;
in the second direction, the first blocking member (31) is located between a pair of clamping sections (22);
wherein the first blocking member (31), the second blocking member (32) and the pair of clamping sections (22) together enclose a storage frame (1000) with a top opening;
or wherein the articles access mechanism having an irregular-shaped articles unloading state:
in the first direction, the first blocking member (31) at a first limit position is located between the limiting member (4) and the second blocking member (32) in a lying state, or the first blocking member (31) at the first limit position accommodates the limiting member (4) through its own accommodating groove (311); in the second direction, the first blocking member (31) is located between a pair of clamping sections (22);
wherein the first blocking member (31) moves in the first direction along with the sliding assembly (21) to push articles (400) on the support member (11) out of the support member (11);
or wherein the articles access mechanism having a regular articles pickup state:
the first blocking member (31) is at a second limit position; and in the first direction, the first blocking member (31) is located on a side of individual clamping sections (22) away from the second blocking member (32); in the second direction, the first blocking member (31) is located outside the movement trajectory of the clamping section (22); the second blocking member (32) is in a lying state, the clamping sections (22) move in the first direction along with the sliding assembly (21) to extend out of the support base (1), and the clamping sections (22) close in the second direction to clamp articles (400) outside the support member (11);
or wherein the articles access mechanism having a regular articles unloading state:
the first blocking member (31) is at a second limit position; and in the first direction, the first blocking member (31) is located on a side of individual clamping sections (22) away from the second blocking member (32); in the second direction, the first blocking member (31) is located outside the movement trajectory of the clamping section (22); the second blocking member (32) is in a lying state; the clamping sections (22) close in the second direction to clamp articles (400) located on the support member (11); the clamping sections (22) move in the first direction along with the sliding assembly (21) to extend out of the support base (1), so as to deliver the clamped articles (400) out of the support member (11);
or wherein the articles access mechanism having the regular articles unloading state:
the first blocking member (31) is located at a first limit position; in the first direction, the first blocking member (31) is located between the limiting member (4) and the second blocking member (32) in a lying state, and the first blocking member (31) is located between a pair of clamping sections (22);
wherein the first blocking member (31) moves in the first direction along with the sliding assembly (21) to push articles (400) on the support member (11) out of the support member (11).

10. An articles access robot, comprising:
- a pallet arm (5); and
- the articles access mechanism according to any one of claims 1 to 9, which is rotatably mounted on the pallet arm (5).

11. The articles access robot according to claim 10, further comprising:
a fifth drive (6) mounted at the pallet arm (5), and
a fifth transmission mechanism (7) drivingly connected to the fifth drive (6) and fixedly connected to the articles access mechanism to drive the articles access mechanism to rotate by the fifth drive (6).

12. The articles access robot according to claim 10, further comprising:
a support column (8);
a sixth drive (9) mounted on the support column (8); and
a sixth transmission mechanism (10) drivingly connected to the sixth drive (9), and the sixth transmission mechanism (10) being fixedly connected to the pallet arm (5) to drive the articles access mechanism to move along the support column (8) under the drive of the sixth drive (9).

13. The articles access robot according to claim 12, wherein the sixth transmission mechanism (10) comprises:
a first synchronous wheel (101) mounted at one end of the support column (8); the first synchronous wheel (101) being fixedly connected to a power output shaft of the sixth drive (9);
a second synchronous wheel (102) mounted at the other end of the support column (8);
a synchronous belt tensioned by the first synchronous wheel (101) and the second synchronous wheel (102); the articles access mechanism being mounted on the synchronous belt to move up and down as the synchronous belt rotates;
a second guide rail (104) mounted on the support column (8); and
a third guide section slidably mounted on the second guide rail (104), and the articles access mechanism being fixedly mounted on the third guide section.

14. A method for picking up and unloading articles, comprising the steps of:
determining whether the articles access system is to pick up or unload articles, wherein the articles access system comprises the articles access robot according to any one of claims 10 to 13;
determining whether the shape of articles (400) to be picked up is regular if the articles access system is to pick up articles;
adjusting the articles access mechanism to the regular-shaped articles pickup state if the shape of the articles (400) is regular;
extending the clamp mechanism (2) of the articles access system to clamp the articles (400).

15. The method for picking up and unloading articles according to claim 14, further comprising the step of:
adjusting the articles access mechanism of the articles access system to the irregular-shaped articles pickup state if the shape of the articles (400) is irregular;
placing the articles (400) into the storage frame (1000) formed by the articles access mechanism of the articles access system;
or further comprising the step of:
determining whether the shape of the articles (400) to be unloaded is regular if the articles access system is to unload articles;
adjusting the articles access mechanism of the articles access system to the irregular-shaped articles unloading state if the shape of the articles (400) is regular;
pushing the articles (400) out of the support member (11) of the articles access mechanism or clamping the articles (400) out of the support member (11);
or further comprising the step of:
adjusting the articles access mechanism of the articles access system to the irregular-shaped articles unloading state if the shape of the articles (400) is irregular;
pushing the articles (400) out of the support member (11) of the articles access mechanism.
